# EUROPEAN PATENT SPECIFICATION

(11) **EP 4 040 391 B1**
(45) Date of publication and mention of the grant of the patent: **29.05.2024**
(21) Application number: 21156089.1
(22) Date of filing: 09.02.2021
(51) Int. Cl.: G06T 7/80

(54) **METHOD FOR CALIBRATING 3D CAMERA BY EMPLOYING CALIBRATED 2D CAMERA**
VERFAHREN ZUR KALIBRIERUNG EINER 3D-KAMERA UNTER VERWENDUNG EINER KALIBRIERTEN 2D-KAMERA
PROCÉDÉ D'ÉTALONNAGE D'UNE CAMÉRA 3D À L'AIDE D'UNE CAMÉRA 2D ÉTALONNÉE

(43) Date of publication of application: 10.08.2022
(73) Proprietor: Techman Robot Inc., Taoyuan City 333 (TW)
(72) Inventor: Huang, Chung-Hsien, Taoyuan City 333 (TW)
(74) Representative: Straus, Alexander

(56) References cited:
- EP-A1- 3 525 000
- WO-A1-2020/233443
- CN-A- 112 017 251
- HOANG VAN-DUNG ET AL: "Closed-form solution to 3D points for estimating extrinsic parameters of camera and laser sensor", 2014 IEEE 23RD INTERNATIONAL SYMPOSIUM ON INDUSTRIAL ELECTRONICS (ISIE), IEEE, June 2014 (2014-06), pages 1932-1937, XP032624082, DOI: 10.1109/ISIE.2014.6864911 [retrieved on 2014-07-24]
- HU GUOLIANG ET AL: "Non-linear calibration optimisation based on the Levenberg-Marquardt algorithm", IET IMAGE PROCESSING, IET, UK, vol. 14, no. 7, 29 May 2020 (2020-05-29), pages 1402-1414, XP006090434, ISSN: 1751-9659, DOI: 10.1049/IET-IPR.2019.1489

## Description

### Field of the Invention

The present disclosure relates to a method of calibrating a 3D camera, in particular, to a method of calibrating a 3D camera coordinate system by employing a calibrated 2D camera.

### Background of the Invention

Due to the rapid development of artificial intelligence, factories employ three-dimensional (3D) cameras to automate processes and assemblies in manufacturing processes for robotic arms, enhancing production efficiency of the factories. The accuracy of a mapping relationship between a coordinate system of the 3D camera and a coordinate system of the robotic arm can affect the precision of a production.

In the related art, coordinate systems of two-dimensional (2D) cameras are calibrated by placing a checkerboard pattern or a derived distortion pattern thereof in the field of view of the 2D camera, recording corner points of the checkerboard pattern of a known size from images captured, and moving the checkerboard pattern from place to place to take images thereof for use to calibrate a transform mapping between the coordinate systems of the 2D cameras. A 3D camera is also referred to as a depth camera, and may also carry 2D information such as RGB color information, monochrome information or grayscale information. When a 3D camera has high-quality 2D information, the 2D information of the 3D camera is usually used to calibrate a transform mapping between coordinate systems of 3D cameras by the calibration method for 2D cameras.

If the 3D camera does not have color information, or the 2D information is insufficient to perform precise positioning, the 3D information of the checkerboard pattern will be used for calibration. The 3D information of the checkerboard pattern includes position information represented by a depth map and a point cloud. The depth map and the point cloud may be transformed by internal parameters of the camera, and represent substantially the same 3D information. Using the principle of all corner points of the checkerboard pattern being on the same plane, the transform mapping between the corner points of the checkerboard pattern detected by the 3D camera and the 2D camera can be computed to obtain parameters for transforming the coordinate systems of the 3D camera and the 2D camera, so as to perform a calibration.

However, for the transform mapping between the coordinate systems in the related art, since the 3D information of the 3D camera is usually more accurate at the center, and becomes increasingly inaccurate toward the edge, information at edge positions of the checkerboard pattern will be less accurate, leading to errors of the transform mapping between coordinate systems, resulting in imprecise calibration of the coordinate system of the 3D camera. In addition, it is required to move the checkerboard pattern to a plurality of positions for the 3D camera to photograph, slowing down the calibration. Therefore, problems need to be solved in the calibration method of 3D cameras.

WO 2020/233443 A1 discloses calibration of a LiDAR and a camera using a contour-based loss function. CN 112017251 A and EP 3525000 A1 disclose extrinsic calibration between a 2D sensor and a 3D sensor based on the scene. Additionally, Van Dung et al., "Closed-form solution to 3D points for estimating extrinsic parameters of camera and laser sensor", 2014 (DOI: 10.1109/ISIE.2014.6864911) and Hu et al., "Non-linear calibration optimisation based on the Levenberg-Marquardt algorithm", 2020 (DOI: 10.1049/IET-IPR.2019.1489) disclose, respectively, calibration between a 2D sensor and a 3D laser sensor using a specific calibration template/pattern having protrusions recognisable by laser radar.

### Summary of the Invention

The present disclosure aims at providing a method of calibrating a 3D (three dimensional) camera. This is achieved by the method of calibrating a 3D camera according to claim 1. The dependent claims pertain to corresponding further developments and improvements.

According to one embodiment of the disclosure, a method of calibrating a 3D camera includes utilizing a 3D object and a background with color contrast on the surfaces for a 2D camera to capture an image and for the 3D camera to capture a point cloud, transforming color information at positions of the 3D object and the background in image captured by the 2D camera, computing a missing score of color changes in the point cloud of the 3D object and the point cloud of the background, optimizing the transform parameters to reduce the missing score to less than the threshold, achieving a quick calibration for the 3D camera.

The method of calibrating the 3D camera further includes pre-calibrating a coordinate system of the 2D camera, arranging a 3D camera to be calibrated in a proximity to the 2D camera, arranging a 3D object and a background having color contrast, e.g., in black and white on the surfaces in a common field of view of the 3D camera and the 2D camera, controlling the 2D camera to capture the image, controlling the 3D camera to capture the point cloud, separating a point cloud of the 3D object and a point cloud of the background captured by the 3D camera, recording raw colors of the point cloud of the 3D object and raw colors of the point cloud of the background, transforming the point cloud of the 3D object and the point cloud of the background into coordinates in a 2D camera coordinate system using the a default value of a transform parameter, obtaining transformed colors from positions of the 3D object in the image captured by the 2D camera according to the transformed point cloud of the 3D object, or from positions of the background in the image captured by the 2D camera according to the transformed point cloud of the background, comparing raw colors and the transformed colors of the point cloud of the 3D object and the point cloud of the background to compute a missing score of the point cloud of the 3D object and the point cloud of the background, and determining whether the missing score is less than a predetermined threshold, and if so, determining that a transform mapping from a coordinate system of the 3D camera to the coordinate system of the 2D camera is completed.

In some embodiments, the method includes pre-calibrating a transform mapping between the coordinate system of the 2D camera and a coordinate system of a robotic arm, and obtaining a transform mapping between the coordinate system of the 3D camera and the coordinate system of the robotic arm using the calibrated 2D camera. In some embodiments, the default value of the transform parameter is configured to overlap the image and the point cloud, and changing the transform parameter is equivalent to shifting overlapping positions of the point cloud and the image.

In some embodiments, the method includes if the missing score is not less than a predetermined threshold, optimizing the predetermined transform parameter to reduce the missing score, changing the predetermined transform parameter, and re-computing another missing score of the point cloud of the 3D object and the point cloud of the background. In some embodiments, the method includes determining color changes between the transformed colors and the raw colors, and counting the color change to determine the missing score, wherein no color change between the transformed colors and the raw colors is counted as no change in the missing score. In some embodiments, the method includes separately computing the missing scores of color changes of the object point cloud and the point cloud of the background, and then summing the missing scores of color changes of the object point cloud and the point cloud of the background.

### Brief Description of the Drawings

In the following, the disclosure is further illustrated by way of example, taking reference to the accompanying drawings. Thereof
FIG. 1 is a schematic diagram of a calibration of a robotic arm and a 2D camera according to an embodiment of the present disclosure;
FIG. 2 is a schematic diagram of using a 2D camera to calibrate a 3D camera according to an embodiment of the present disclosure;
FIG. 3 is an image of a 3D object captured by a 2D camera according to an embodiment of the present disclosure;
FIG. 4 is an overlapping view of an image and a point cloud of a 3D object according to an embodiment of the present disclosure;
FIG. 5 is an overlay view of an image and a point cloud of a 3D object according to an embodiment of the present disclosure; and
FIG. 6 is a flowchart of a calibration method of a 3D camera according to an embodiment of the present disclosure.

### Detailed Description

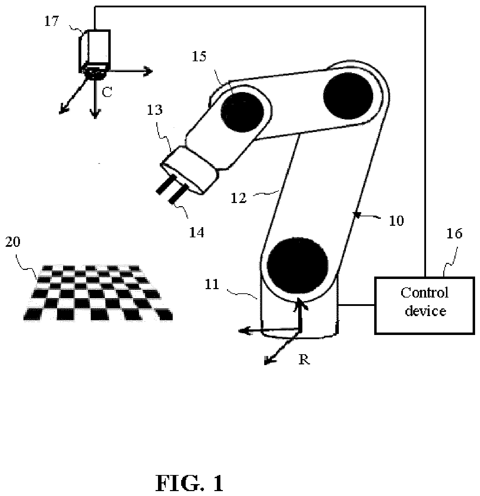

FIG. 1 is a schematic diagram of a calibration of a robotic arm and a 2D camera according to an embodiment of the present disclosure. In FIG. 1, one end of a robotic arm 10 is a fixed base 11 sequentially connected to a plurality of shafts 12 to form a movable end portion 13 at the other end of the robotic arm 10. A tool 14 is arranged at the end portion 13, and actuator motors 15 are respectively arranged at each shaft 12 and connected to a control device 16. The control device 16 of the robotic arm 10 controls the rotation angles of the actuator motors 15 of each shaft 12, so as to move the tool 14 at the end portion 13 of the robotic arm 10. The robotic arm 10 of the present disclosure employs the fixed base 11 as a reference point to form an arm coordinate system R of the robotic arm 10. The control device 16 may calculate a movement position of the tool 14 according to known lengths of each shaft 12 and the tool 14 at the end portion 13 of the robotic arm 10, and according to the rotation angles of the actuator motors 15 of each shaft 12, so as to position coordinates of the tool 14 in the arm coordinate system R to accurately move the tool 14.

In the present disclosure, a 2D camera 17 is installed in the working environment of the robotic arm 10, the field captured by the 2D camera 17 forms a camera coordinate system C, and the information captured by the 2D camera 17 is transmitted to the control device 16 for processing. A calibration tool 20 having a checkerboard pattern or various deformation derivatives thereof is disposed in the working environment of the robotic arm 10 and is present in the field of view of the 2D camera 17. The calibration tool 20 and the robotic arm 10 have a known positional relationship, and the 2D camera 17 may be used to capture and record an imaging position of the calibration tool 20 of a known size in the image, and the robotic arm 10 may be operated to contact multiple checkerboard corner points, so as to complete a pre-calibration for a transform mapping between the coordinate system C of the 2D camera 17 and the coordinate system R of the robotic arm 10 as in the related art. While the 2D camera 17 is installed externally to the robotic arm 10 in the embodiment, the disclosure is not limited by the configuration. The 2D camera 17 may also be fixed on the robotic arm 10, and the pre-calibration of the transform mapping between the coordinate system C of the 2D camera 17 and the coordinate system R of the robotic arm 10 may be achieved using a fixed relative position of the 2D camera 17.

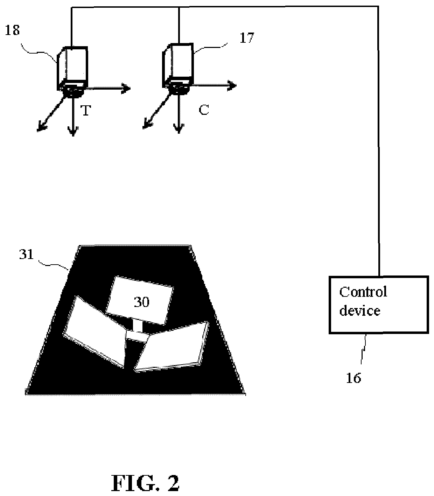

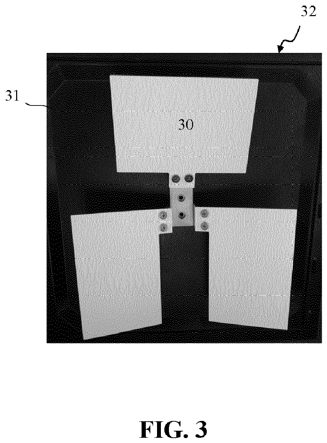

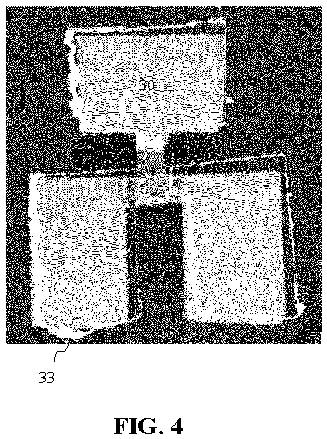

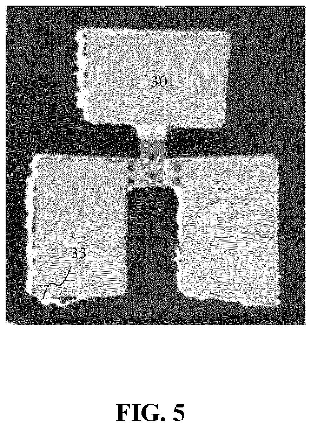

Please refer to FIGs. 2 to 5. FIG. 2 is a schematic diagram of using a 2D camera to calibrate a 3D camera according to an embodiment of the present disclosure, FIG. 3 is an image of a 3D object captured by the 2D camera according to an embodiment of the present disclosure, FIG. 4 is an overlapping view of the image and the point cloud of the 3D object according to an embodiment of the present disclosure, and FIG. 5 is an overlay view of the image and the point cloud of the 3D object according to an embodiment of the present disclosure. In FIG. 2, the calibrated 2D camera 17 may be placed in the proximity to a 3D camera 18 in need of a calibration. The field captured by the 3D camera 18 may form a camera coordinate system T, and the 3D camera 18 may be connected to the control device 16 for the 3D camera 18 to receive control from the control device 16 and for the control device 16 to process the information captured by the 3D camera 18. A 3D object 30 and a background 31 having a color contrast on the surfaces may be placed in a common field of view of the camera 18 and the 2D camera 17, the 2D camera 17 may be controlled to capture an image 32 of the 3D object 30 (refer to FIG. 3), while the 3D camera 18 may be controlled to capture a point cloud 33 of the 3D object 30 (refer to FIG. 4). In one example, the 3D object 30 may be white in color, the background 31 may be black in color. Nevertheless, the present disclosure may include, but is not limited to, black and white contrasting colors. The reason for having the contrasting colors on the surfaces of the 3D object 30 and the background 31 is to display the strong color contrast between the 3D object 30 and the background 31 on the image 32 and the point cloud 33, so as to enable the 3D camera 18 and the 2D camera 17 to perform image processing to quickly identify the difference. In addition, while a three-plate 3D object 30 is adopted in the embodiment, the present disclosure is not limited thereto, other 3D objects may be applicable to the disclosure.

Using the contrasting colors on the surfaces, a point cloud of the 3D object 30 and a point cloud of the background 31 captured by the 3D camera 18 may be separated, and the raw colors of the point cloud of the 3D object 30 and the point cloud of the background 31 may be recorded. In FIG. 4, the image 32 and the point cloud 33 may be overlapped using a default value of a transform parameter, the point cloud of the 3D object 30 and the point cloud of the background 31 may be transformed into the coordinates in the coordinate system C of the 2D camera 17, and the transformed color of each point in the point clouds at a position of the 3D object 30 or the background 31 in the image 32 of the 2D camera 17 may be obtained according to the transformed point cloud of the 3D object 30 and the transformed point cloud of the background 31, with reference to the image 32 of the 2D camera 17. Then the transformed color and the recorded raw color of each point in each point cloud are compared, e.g., the position of a point in the point cloud of the 3D object 30 is located at the position of a point of the background 31 in the image 32, or the position of a point in the point cloud of the background 31 is located at the position of a point of the 3D object 30 in the image 32. When the transformed color is different from the raw color, a color change has occurred. A color change in a point cloud may be counted as a missing score, and no color change in a point cloud may be counted as no missing score. A missing score of the color change in the point cloud may be counted. Alternatively, a missing score of the color change of the point cloud of the 3D object 30 and a missing score of the color change of the point cloud of the background 31 may counted separately, and then the missing scores are summed to generate a missing score of the color change.

Next the missing score may be checked. If the missing score is not less than a predetermined threshold, the calibration of the 3D camera 18 has not yet completed, the transform parameter may be changed, i.e., changing the positions of the point cloud 33 overlapped to the image 32, and the preceding color change determination step may be repeated. The missing score may be further optimized and reduced until the missing score is less than the predetermined threshold, that is, the 3D object 30 in the image 32 and the point cloud of the 3D object 30 in the point cloud 33 are substantially overlaid (referred to FIG. 5), and the transform mapping between the coordinate system T of the 3D camera 18 and the coordinate system C of the 2D camera 17 is completed, achieving the calibration of the transform mapping between the coordinate system T of the 3D camera 18 and the coordinate system C of the 2D camera 17. Therefore, the transform mapping between the coordinate system T of the 3D camera 18 and the coordinate system R of the robotic arm 10 may be obtained using the calibrated 2D camera 17.

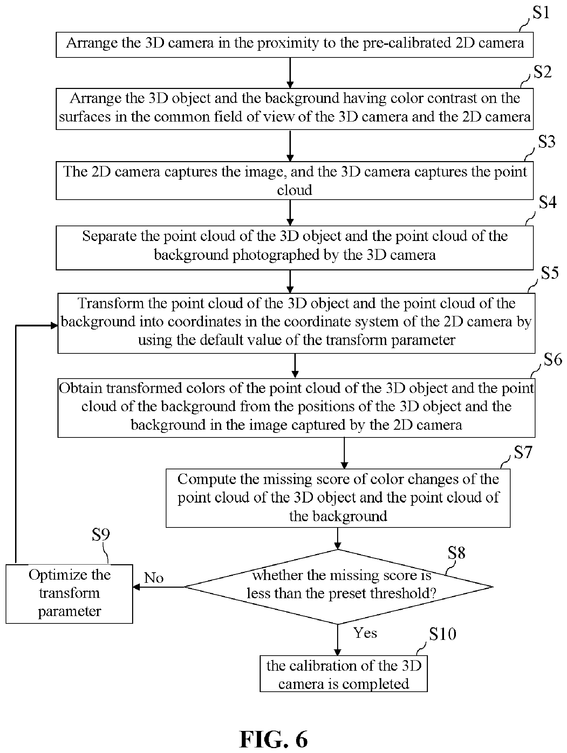

FIG. 6 is a flowchart of a calibration method of the 3D camera according to an embodiment of the present disclosure. Steps of the calibration method of the 3D camera are detailed as follows: First in Step S1, pre-calibrate the coordinate system of the 2D camera, and arrange the 3D camera to be calibrated in the proximity to the 2D camera; In Step S2, arrange the 3D object and the background having a color contrast on the surfaces in the common field of view of the 3D camera and the 2D camera; Next in Step S3, control the 2D camera to capture the image, and control the 3D camera to capture the point cloud; In Step S4, separate the point cloud of the 3D object and the point cloud of the background captured by the 3D camera, and record the raw colors of the point cloud of the 3D object and the raw colors of the point cloud of the background; In Step S5, transform the point cloud of the 3D object and the point cloud of the background into coordinates in the coordinate system of the 2D camera by using the default value of the transform parameter; In Step S6, obtain transformed colors information from the positions of the 3D object in the image captured by the 2D camera according to the transformed point cloud of the 3D object, or from the positions of the background in the image captured by the 2D camera according to the transformed point cloud of the background; In Step S7, compare the raw colors and the transformed colors of each point cloud, and compute the missing score of color changes; In Step S8, determine whether the missing score is not less than the preset threshold, and if so, go to Step S9, optimize the transform parameter to reduce the missing score, change the transform parameter, and go back to Step S5 to repeat the preceding missing score computation step, if the missing score is less than the predetermined threshold, go to Step S10 to complete the transform mapping between the coordinate system of the 3D camera and the coordinate system of the 2D camera.

Therefore, the calibration method of the 3D camera in the present disclosure includes utilizing the 3D object and the background with color contrast on the surfaces for the 2D camera to capture the image and for the 3D camera to the capture the point cloud in an one-pass operation, separating and recording the raw colors of the point cloud of the 3D object and the point cloud of the background, and overlapping the image and the point cloud, transforming the color information at the positions of the 3D object and the background in image captured by the 2D camera, computing the missing score of color changes in the point cloud of the object and the point cloud of the background, continuing to perform digital computation and optimization of the transform parameters to reduce the missing score to less than the threshold, so as to substantially overlay the image of the 3D object in the image and the point cloud of the 3D object in the point cloud, and obtain the transform parameters of the coordinate system, thereby achieving a quick calibration for the 3D camera using a one-pass photographing and quick digital computation.

## Claims

1. A method of calibrating a 3D (three dimensional) camera (18), comprising:
pre-calibrating a 2D (two dimensional) camera coordinate system (C), and arranging the 3D camera (18) to be calibrated in a proximity to a 2D camera (17);
arranging in a common field of view of the 3D camera (18) and the 2D camera (17) a 3D object (30) and a background (31) having color contrast on surfaces between each other;
controlling the 2D camera (17) to capture an image, and controlling the 3D camera (18) to capture a point cloud;
separating a point cloud of the 3D object (30) and a point cloud of the background (31) captured by the 3D camera (18), and recording raw colors of the point cloud of the 3D object (30) and raw colors of the point cloud of the background (31);
transforming the point cloud of the 3D object (30) and the point cloud of the background (31) into coordinates in the 2D camera coordinate system (C) using a default value of a predetermined transform parameter;
obtaining a transformed color of each point in the point clouds at a position of the 3D object (30) or the background (31) in the image (32) captured by of the 2D camera (17) according to each point of the transformed point cloud of the 3D object (30), or from positions of the background (31) in the image captured by the 2D camera (17) according to each point of the transformed point cloud of the background (31);
comparing the raw color and the transformed color of each point in the point cloud of the 3D object (30) and in
the point cloud of the background (31) to compute a missing score of the point cloud of the 3D object (30) and the point cloud of the background (31); and
determining whether the missing score is less than a predetermined threshold, and if so, determining that a transform mapping from a coordinate system (T) of the 3D camera (18) to the 2D camera coordinate system (C) is completed.

2. The method of Claim 1, wherein the pre-calibrating the 2D camera coordinate system (C) comprises calibrating the 2D camera coordinate system (C) and a coordinate system (R) of a robotic arm (10) to determine a transform mapping therebetween.

3. The method of Claim 2, further comprising obtaining a transform mapping between the coordinate system (T) of the 3D camera (18) and the coordinate system (R) of the robotic arm (10) using the calibrated 2D camera (17).

4. The method of any of the preceding claims, wherein the 3D object (30) is white on a surface thereof and the background (31) is black on a surface thereof.

5. The method of any of the preceding claims, further comprising if the missing score is not less than the predetermined threshold, optimizing the predetermined transform parameter to reduce the missing score, changing the predetermined transform parameter, and re-computing another missing score of the point cloud of the 3D object (30) and the point cloud of the background (31).

6. The method of Claim 5, wherein the default value of the predetermined transform parameter is configured to overlap the image and the point cloud.

7. The method of Claim 5, wherein the changing the predetermined transform parameter is equivalent to shifting overlapping positions of the point cloud and the image.

8. The method of any of the preceding claims, wherein comparing the raw color and the transformed color of each point in the point cloud of the 3D object (30) and in the point cloud of the background (31) to compute the missing score of the point cloud of the 3D object (30) and the point cloud of the background (31) comprises:
determining color changes between the transformed colors and the raw colors; and
counting the color change to determine the missing score, wherein no color change between the transformed colors and the raw colors is counted as no change in the missing score.

9. The method of any of the preceding claims, wherein comparing the raw color and the transformed color of each point in the point cloud of the 3D object (30) and in the point cloud of the background (31) to compute the missing score of the point cloud of the 3D object (30) and the point cloud of the background (31) comprises:
computing a score of color changes for the point cloud of the 3D object (30), and a score of color changes for the point cloud of the background (31); and
then summing the scores of color changes of the object point cloud and the point cloud of the background (31) to generate a missing score.

## Patentansprüche

1. Ein Methode zur Kalibrierung ein 3D-Kamera (dreidimensional) (18), charakterisiert durch enthaltend:
Die Vorkalibrierung eines 2D-Kamera Koordinatensystems (C) und die Anordnung der zu kalibrierenden 3D-Kamera (18) in unmittelbarer Nähe zu einer 2D-Kamera (17);
Die Anordnung eines 3D-Objekts (30) und eines Hintergrunds (31), die sich durch farblichen Kontrast auf ihren Oberflächen voneinander abheben, im gemeinsamen Sichtfeld der 3D-Kamera (18) und der 2D-Kamera (17);
Die Steuerung der 2D-Kamera (17) zur Aufnahme eines Bildes und die Steuerung der 3D-Kamera (18) zur Erfassung einer Punktewolke;
Trennen einer Punktewolke des 3D-Objekts (30) und einer Punktewolke des Hintergrunds (31), die von der 3D-Kamera (18) erfasst wurden, und Aufzeichnen der Rohfarben der Punktewolke des 3D-Objekts (30) und der Rohfarben der Punktewolke des Hintergrunds (31);
Die Umwandlung der Punktwolke des 3D-Objekts (30) und der Punktwolke des Hintergrunds (31) in Koordinaten im 2D-Kamerakoordinatensystem (C) unter Verwendung eines Standardwerts eines vorbestimmten Transformationsparameters;
Gewinnung transformierter Farbinformationen aus den Positionen des 3D-Objekts (30) im Bild, das von der 2D-Kamera (17) erfasst wurde, entsprechend jedem Punkt der transformierten Punktwolke des 3D-Objekts (30) oder aus den Positionen des Hintergrunds (31) im Bild, das von der 2D-Kamera (17) erfasst wurde, entsprechend jedem Punkt der transformierten Punktwolke des Hintergrunds (31);
Vergleich der Rohfarben und der transformierten Farben der Punktwolke des 3D-Objekts (30) und der Punktwolke des Hintergrunds (31), um einen fehlenden Wert der Punktwolke des 3D-Objekts (30) und der Punktwolke des Hintergrunds (31) zu berechnen; und
Feststellung, ob die fehlende Punktzahl unter einem vorher festgelegten Schwellenwert liegt, und falls ja, Feststellung, dass eine Transformationsabbildung von einem Koordinatensystem (T) der 3D-Kamera (18) auf das 2D-Kamerakoordinatensystem (C) abgeschlossen ist.

2. Die Methode nach Anspruch 1 zeichnet sich dadurch aus, dass die Vorjustierung des 2D-Kamerakoordinatensystems (C) die Kalibrierung des 2D-Kamerakoordinatensystems (C) und eines Koordinatensystems (R) eines robotischer arm (10) umfasst, um eine Transformationsabbildung zwischen ihnen zu bestimmen.

3. Die Methode gemäß Anspruch 2 zeichnet sich dadurch aus, dass sie zusätzlich die Erstellung einer Transformationsabbildung zwischen dem Koordinatensystem (T) der 3D-Kamera (18) und dem Koordinatensystem (R) des robotischer arm (10) unter Verwendung der kalibrierten 2D-Kamera (17) umfasst.

4. Die Methode gemäß einem der vorhergehenden Ansprüche, **gekennzeichnet dadurch, dass** das 3D-Objekt (30) weiß auf einer seiner Oberflächen ist und der Hintergrund (31) schwarz auf einer seiner Oberflächen ist.

5. Die Methode gemäß einem der vorhergehenden Ansprüche zeichnet sich dadurch aus, dass sie zusätzlich umfasst, falls die fehlende Wertung nicht unterhalb des vorher festgelegten Schwellenwerts liegt, die Optimierung des vorbestimmten Transformationsparameters zur Verringerung der fehlenden Wertung, die Änderung des vorbestimmten Transformationsparameters und die Neuberechnung einer weiteren fehlenden Wertung der Punktewolke des 3D-Objekts (30) und der Punktewolke des Hintergrunds (31).

6. Das Verfahren nach Anspruch 5, **gekennzeichnet dadurch, dass** der Standardwert des vorbestimmten Transformationsparameters so konfiguriert ist, dass er mit dem Bild und der Punktwolke überlappt.

7. Die Methode nach Anspruch 5 zeichnet sich dadurch aus, dass die Änderung des vorbestimmten Transformationsparameters gleichbedeutend ist mit dem Verschieben überlappender Positionen der Punktwolke und des Bildes.

8. Die Methode gemäß einem der vorhergehenden Ansprüche, **gekennzeichnet dadurch, dass** der Vergleich der Rohfarben und der transformierten Farben der Punktewolke des 3D-Objekts (30) und der Punktewolke des Hintergrunds (31) zur Berechnung des fehlenden Punktwolken-Scores des 3D-Objekts (30) und der Punktewolke des Hintergrunds (31) umfasst:
Ermittlung von Farbänderungen zwischen den transformierten Farben und den Rohfarben; und
Das Zählen der Farbänderungen zur Bestimmung des fehlenden Punktwerts, wobei keine Farbänderung zwischen den transformierten Farben und den Rohfarben als keine Veränderung im fehlenden Punktwert gezählt wird.

9. Die Methode gemäß einem der vorhergehenden Ansprüche, **gekennzeichnet durch** den Vergleich der Rohfarben und der transformierten Farben der Punktwolke des 3D-Objekts (30) und der Punktwolke des Hintergrunds (31) zur Berechnung des fehlenden Wertes der Punktwolke des 3D-Objekts (30) und der Punktwolke des Hintergrunds (31) umfasst:
Berechnung eines Farbänderungswerts für die Punktewolke des 3D-Objekts (30) und eines Farbänderungswerts für die Punktewolke des Hintergrunds (31); und
Daraufhin werden die Punktzahlen der Farbänderungen des Objektpunktwolken und der Punktewolke des Hintergrunds (31) addiert, um eine fehlende Punktzahl zu generieren.

## Revendications

1. Une méthode d'étalonnage d'une caméra 3D (tridimensionnelle) (18), **caractérisée en ce qu'**elle comprenant:
Pré-calibrer un système de coordonnées de caméra 2D (bidimensionnel) (C) et positionner la caméra 3D (18) à calibrer à proximité d'une caméra 2D (17);
Disposant dans un champ de vision commun de la caméra 3D (18) et de la caméra 2D (17), un objet tridimensionnel (30) ainsi qu'un arrière-plan (31) présentant un contraste de couleurs sur les surfaces les uns par rapport aux autres;
Contrôler la caméra 2D (17) afin de capturer une image, et diriger la caméra 3D (18) pour saisir un nuage de points;
Séparer une nuée de points de l'objet tridimensionnel (30) et une nuée de points de l'arrière-plan (31) capturés par la caméra tridimensionnelle (18), et enregistrer les couleurs brutes de la nuée de points de l'objet tridimensionnel (30) ainsi que les couleurs brutes de la nuée de points de l'arrière-plan (31);
Transformant la nuée de points de l'objet tridimensionnel (30) ainsi que la nuée de points de l'arrière-plan (31) en coordonnées au sein du système de coordonnées de la caméra bidimensionnelle (C), cela au moyen d'une valeur par défaut d'un paramètre de transformation prédéterminé;
Obtenir des informations sur les couleurs transformées à partir des positions de l'objet 3D (30) dans l'image saisie par la caméra 2D (17), conformément à chaque point du nuage de points transformé de l'objet 3D (30), ou à partir des positions de l'arrière-plan (31) dans l'image capturée par la caméra 2D (17), selon chaque point du nuage de points transformé de l'arrière-plan (31);
Comparer les couleurs brutes et les couleurs transformées de la nuée de points de l'objet tridimensionnel (30) ainsi que de la nuée de points de l'arrière-plan (31), afin de calculer un indice de disparité pour la nuée de points de l'objet tridimensionnel (30) et pour celle de l'arrière-plan (31); et
Déterminer si le score manquant est inférieur à un seuil prédéfini et, dans l'affirmative, conclure que la transformation permettant de passer du système de coordonnées (T) de la caméra 3D (18) au système de coordonnées de la caméra 2D (C) est achevée.

2. La méthode revendiquée au premier point, se distinguant en ce que la pré-calibration du système de coordonnées de la caméra bidimensionnelle (C) englobe l'étalonnage du système de coordonnées de la caméra bidimensionnelle (C) ainsi que celui du système de coordonnées (R) d'un bras robotique (10), dans le but de déterminer une correspondance de transformation entre eux.

3. Le procédé selon la revendication 2, se distinguant par l'inclusion d'une étape supplémentaire consistant à obtenir une cartographie de transformation entre le système de coordonnées (T) de la caméra 3D (18) et le système de coordonnées (R) du bras robotique (10), en utilisant la caméra 2D calibrée (17).

4. La méthode selon l'une quelconque des revendications précédentes, se distinguant en ce que l'objet tridimensionnel (30) est d'un blanc immaculé sur l'une de ses surfaces, tandis que l'arrière-plan (31) arbore un noir profond sur l'une de ses faces.

5. La méthode de l'une quelconque des revendications précédentes, se distinguant en ce qu'elle comprenant en outre, si le score manquant n'est pas inférieur au seuil prédéfini, l'optimisation du paramètre de transformation prédéterminé afin de diminuer ledit score manquant, la modification du paramètre de transformation prédéterminé, et le recalcul d'un autre score manquant de la nuée de points de l'objet tridimensionnel (30) ainsi que de la nuée de points de l'arrière-plan (31).

6. La méthode selon la revendication 5, se **caractérise en ce que** la valeur par défaut du paramètre de transformation prédéterminé est configurée pour superposer l'image et le nuage de points.

7. Le procédé selon la revendication 5, **se caractérisant en ce que** la modification du paramètre de transformation prédéterminé est équivalente à un décalage des positions chevauchantes de la nuée de points et de l'image.

8. Le procédé selon l'une quelconque des revendications précédentes, **caractérisé en ce qu'**il consiste à comparer les couleurs brutes et les couleurs transformées de la nuée de points de l'objet 3D (30) ainsi que de la nuée de points de l'arrière-plan (31), afin de calculer le score manquant de la nuée de points de l'objet 3D (30) et de la nuée de points de l'arrière-plan (31), comprenant:
Déterminer les variations de couleur entre les teintes transformées et les couleurs brutes; et
Comptabilisant le changement de couleur pour déterminer le score manquant, dans lequel l'absence de changement entre les couleurs transformées et les couleurs originales est considérée comme une absence de modification dans le score manquant.

9. La méthode selon l'une quelconque des revendications précédentes, se distinguant en ce qu'elle implique la comparaison des couleurs brutes et des couleurs transformées de la nuée de points de l'objet 3D (30) ainsi que de la nuée de points de l'arrière-plan (31), afin de calculer le score manquant de la nuée de points de l'objet 3D (30) et de la nuée de points de l'arrière-plan (31), comprenant:
Calcul d'un score de modifications chromatiques pour le nuage de points de l'objet tridimensionnel (30), ainsi que d'un score de modifications chromatiques pour le nuage de points de l'arrière-plan (31); et
Puis, en additionnant les scores des modifications de couleur de la nuée de points de l'objet et de la nuée de points de l'arrière-plan (31) afin de générer un score manquant.
